# EUROPÄISCHE PATENTANMELDUNG

(11) **EP 0 776 699 A1**
(43) Veröffentlichungstag der Anmeldung: **04.06.1997**
(21) Anmeldenummer: 96118615.2
(22) Anmeldetag: 20.11.1996
(51) Int. Cl.: B01J 31/12

(54) **Herstellung eines Hydrierkatalysators unter Verwendung von M(OR)mXn**

(30) Priorität: 29.11.1995 DE 19544403
(71) Anmelder: BASF AKTIENGESELLSCHAFT, 67056 Ludwigshafen (DE)
(72) Erfinder: Heineke, Daniel, Dr., 67065 Ludwigshafen (DE); Eller, Karsten, Dr., 67059 Ludwigshafen (DE); Schneider, Heinz-Walter, Dr., 67069 Ludwigshafen (DE); Thome, Alfred, Dr., 67346 Speyer (DE)

(57) **Zusammenfassung**

Herstellung eines kohlenstoffhaltigen Katalysatorträgers, indem man den kohlenstoffhaltigen Katalysatorträger mit einer Verbindung der allgemeinen Formel I

M(OR)ₘXₙ I

in der M für Ti oder Zr, X für Cl oder Br und R für C₁-C₂₀-Alkyl stehen, und m und n ganze Zahlen zwischen null und vier sind, wobei die Summe aus m und n gleich vier ist, behandelt.

## Beschreibung

Die vorliegende Erfindung betrifft ein Verfahren zur Herstellung eines Kohlenstoff-haltigen Katalysatorträgers.

Des weiteren betrifft die Erfindung einen Kohlenstoff-haltigen Katalysatorträger, die Verwendung der Verbindung I, M(OR)ₘXₙ, ein Verfahren zur Herstellung eines Hydrierungskatalysators, einen Hydrierungskatalysator, die Verwendung des erfindungsgemäßen Kohlenstoff-haltigen Katalysatorträgers zur Herstellung eines Hydrierungskatalysators, die Verwendung des erfindungsgemäßen Hydrierungskatalysators zur Herstellung von Hydroxylammoniumsalzen, ein Verfahren zur Herstellung von Hydroxylammoniumsalzen sowie ein Verfahren zum Regenerieren eines Pt-haltigen Hydrierungskatalysators.

Für die Hydrierung von organischen und anorganischen Verbindungen eignen sich Edelmetalle wie Palladium, Platin oder Ruthenium, die auf diverse Träger wie Siliciumdioxid, Aluminiumoxid, Graphit oder Aktivkohle aufgebracht sind, wie aus "Katalytische Hydrierungen im organisch chemischen Laboratorium", F. Zimalkowski, Ferdinand Enke Verlag, Stuttgart (1965) bekannt ist.

Wesentlich für die Aktivität dieser Katalysatoren ist die hohe Dispersion des Edelmetalls auf dem Katalysatorträger. Verfahrenstechnisch nachteilig ist die Tatsache (siehe "Structure of Metallic Catalyst", J.R. Anderson, Academic Press (1975), Seiten 164ff), daß unter Reaktionsbedingungen durch Agglomeration die Partikelgröße des aufgebrachten Edelmetalls zunimmt, die Dispersion abnimmt, sowie das elementare Edelmetall von der Trägermasse abgelöst wird.

Die DE-C 40 22 853 beschreibt, daß durch Verwendung von Platin-Graphitträger-Katalysatoren mit einer Korngröße des Graphits zwischen 1-600 µm die Selektivität in Bezug auf Hydroxylamin bei der Hydrierung von Stickstoffmonoxid gesteigert werden kann.

Aus der DE-PS 956,038 sind bereits Platin-Graphitträger-Katalysatoren bekannt, die durch Fällen von Platin auf suspendierten Graphitträgern, gegebenenfalls unter Zusatz von vergiftenden Mitteln wie Schwefel-, Selen-, Arsen- oder Tellurverbindungen, erhalten werden. Solche Katalysatoren eignen sich zur katalytischen Hydrierung von Stickstoffmonoxid. Diese Katalysatoren haben den Nachteil, daß die Reaktivität und Selektivität bei längerem Gebrauch rasch abnimmt.

Die DE-C 40 22 851 beschreibt, daß bei der Herstellung von Hydroxylamin durch Hydrierung von Stickstoffmonoxid in Gegenwart von Platin-Graphit-Trägerkatalysatoren die Selektivität in Zusammenhang mit der scheinbaren Dichte, der Druckfestigkeit und Porosität des Graphitträgers steht.

Die in den Verfahren der zuvor genannten deutschen Patentschriften verwendeten Katalysatoren haben den Nachteil, daß aufgrund von Agglomeration der Aktivkomponenten nur relativ kurze Standzeiten der Katalysatoren erreicht werden können.

Von einigen keramischen Oxiden ist bekannt, daß sie mit Edelmetallen wie Platin, Palladium oder Rhodium sehr starke Wechselwirkungen eingehen. Dieser Effekt ist aus der Literatur als SMSI (strong metal support interaction) bekannt (s. z.B. A. Rochefort und F. Le Peltier, Revue de l'Institut français du pétrole Vol. 46, No. 2, Mars-Avril 1991). Besonders ausgeprägt ist dieser Effekt bei TiO₂ und Pt. Durch die starke Wechselwirkung des Platins mit dem Träger ist die Ablösung der Edelmetallkomponente erschwert.

Die Wechselwirkung von Übergangsmetallen mit Kohlenstoff-haltigen Trägern ist wesentlich schwächer als mit keramischen Oxiden. Durch Aufbringung von Ti(0) auf Aktivkohle und anschließender Oxidation zu TiO₂ kann jedoch die Oberfläche der Aktivkohle derart verändert werden, daß eine starke Wechselwirkung zwischen dem Träger und dem Edelmetall vorliegt, wie von Bönnemann (J. Mol. Catal. 74 (1992) 323-333) gezeigt werden konnte. Die Aufbringung des Ti(0) erfordert jedoch die vorherige aufwendige Darstellung eines (C₆H₆)₂Ti -Komplexes unter Inertgasatmosphäre und die anschließende Aufbringung der Edelmetallkomponente auf den vorbehandelten Träger als Sol.

Aufgabe der vorliegenden Erfindung war es daher, ein verbessertes Verfahren zur Herstellung von Hydrierungskatalysatoren zur Verfügung zu stellen, das weniger aufwendig ist als die bislang bekannten Verfahren. Insbesondere sollten Pt-haltige Hydrierungskatalysatoren zur Herstellung von Hydroxylammoniumsalzen hergestellt werden, in denen Platin so stabil aufgebracht ist, daß längere Standzeiten der verwendeten Hydrierungskatalysatoren bei mindestens gleicher Selektivität und hoher Raum-Zeit-Ausbeute gewährleistet sind. Des weiteren sollte die Nebenproduktbildung reduziert werden.

Demgemäß wurde ein verbessertes Verfahren zur Herstellung eines Kohlenstoff-haltigen Katalysatorträgers gefunden, in dem man den Kohlenstoff-haltigen Katalysatorträger mit einer Verbindung der allgemeinen Formel I

M(OR)ₘXₙ I

in der M für Ti oder Zr, X für Cl oder Br und R für C₁-C₂₀-Alkyl stehen, und m und n ganze Zahlen zwischen null und vier sind, wobei die Summe aus m und n gleich vier ist, behandelt.

Des weiteren wurden ein Kohlenstoff-haltiger Katalysatorträger, die Verwendung der Verbindung I, M(OR)ₘXₙ, ein Verfahren zur Herstellung eines Hydrierungskatalysators, ein Hydrierungskatalysator, die Verwendung des erfindungsgemäßen Katalysatorträgers zur Herstellung eines Hydrierungskatalysators, die Verwendung des erfindungsgemäßen Hydrierungskatalysators zur Herstellung von Hydroxylammoniumsalzen, ein Verfahren zur Herstellung von Hydroxylammoniumsalzen sowie ein Verfahren zum Regenerieren eines Pt-haltigen Hydrierungskatalysators gefunden.

Die erfindungsgemäße Herstellung des Kohlenstoff-haltigen Katalysatorträgers erfolgt durch Behandeln eines Kohlenstoff-haltigen Katalysatorträgers mit einer Verbindung der allgemeinen Formel I

M(OR)ₘXₙ I

in der M für Titan oder Zirkonium, bevorzugt Titan, X für Cl oder Br, bevorzugt Chlor, R für C₁-C₂₀-Alkyl, insbesondere C₁-C₄-Alkyl wie Methyl, Ethyl, n-, i-Propyl, n-, i-, sek.- oder tert.Butyl, besonders bevorzugt i-Propyl und n-Butyl, stehen, und m und n ganze Zahlen zwischen null und vier sind, wobei die Summe aus m und n gleich vier ist, bevorzugt wählt man für m vier und n gleich null oder für m null und für n vier.

Nach bisherigen Beobachtungen kann man die beschriebene Vorgehensweise auch für andere Metallalkoxide oder Metallhalogenide wie Si(OR)₄, Al(OR)₃, AlCl₃ oder SiCl₄ übertragen, jedoch führt dies üblicherweise zu schwächeren SMSI als bei den beanspruchten Verbindungen.

Als besonders bevorzugte Verbindungen I haben sich nach bisherigen Beobachtungen Ti(O-i-Pr)₄, Ti(O-n-Bu)₄ und TiCl₄ herausgestellt.

Als Kohlenstoff-haltige Katalysatorträger eignen sich in der Regel suspendiertes Graphit oder Aktivkohlen, insbesondere Elektrographitsorten, besonders bevorzugt solche Elektrographitsorten, die eine Teilchengröße im Bereich von 0,5 bis 600 µm, insbesondere von 2 bis 50 µm aufweisen.

Die Behandlung des Kohlenstoff-haltigen Katalysatorträgers führt man bevorzugt in wasserfreien Lösungsmitteln, beispielsweise in Alkoholen, bevorzugt C₁-C₆-Alkanolen wie Methanol, Ethanol, n-, i-Propanol, n-, i-, sek.-, tert.-Butanol, n-Pentanol und n-Hexanol, insbesondere in n-Butanol, durch.

Üblicherweise behandelt man den Katalysatorträger mit der Verbindung I bei einer Temperatur im Bereich von 0 bis 100^{o}C, bevorzugt im Bereich von 10 bis 50^{o}C, und einem Druck im Bereich von 1 bis 1000, bevorzugt von 50 bis 200 kPa.

Werden Halogenide oder teilweise durch Halogen substituierte Alkoxide des Titans oder Zirkons in einem alkoholischen Lösungsmittel eingesetzt, so kann eine Reaktion des als Lösungsmittel dienenden Alkohols mit den Halogenid oder Alkoxid Liganden des Titans im Sinne einer Alkoholyse oder einer Umesterung stattfinden. Ebenso kann die entsprechende Titanverbindung mit den funktionellen sauerstoffhaltigen Gruppen des Kohlenstoff-haltigen Trägers in gewünschter Weise reagieren, wobei das Titan nach bisherigen Beobachtungen auf dem Träger verankert wird. Die Reaktion wird im allgemeinen durch Zusatz einer geringen Menge Wassers (Quenchen), üblicherweise wählt man das Molverhältnis von Wasser zu Verbindung I im Bereich von 1000:1 bis 2:1, bevorzugt von 100:1 bis 4:1, beendet. Anschließend wird der Kohlenstoff-haltige Träger filtriert, gewaschen und getrocknet.

Nach der Lehre von Bönnemann (s.o.) eignen sich nur niedrigvalente Titanverbindungen zur Herstellung von Titan-dotierten Kohlenstoff-haltigen Katalysatorträgern. Die Verwendung der Verbindungen I zur Herstellung von Kohlenstoff-haltigen Katalysatorträgern war daher nicht zu erwarten gewesen.

Die Herstellung der erfindungsgemäßen Hydrierungskatalysatoren erfolgt durch Fällen von Platin in einem wäßrigen Medium auf einen Kohlenstoff-haltigen Katalysatorträger, gegebenenfalls nach erfolgter partieller Vergiftung mit Schwefel-, Arsen-, Tellur- oder Antimon-haltigen Verbindungen, mit einem Reduktionsmittel, wobei man einen Kohlenstoff-haltigen Katalysatorträger einsetzt, der mit Verbindung I behandelt wurde.

Man kann daher den erfindungsgemäßen Kohlenstoff-haltigen Katalysatorträgers oder nach dem erfindungsgemäßen Verfahren hergestellten Katalysatorträger zur Herstellung eines Platinhaltigen Hydrierungskatalysators einsetzen.

Üblicherweise reduziert man dabei in an sich bekannter Weise (beispielsweise nach dem in der DE-C 40 22 853 beschrieben Verfahren) eine Platin(IV)-Verbindung in wäßriger Lösung in Gegenwart des erfindungsgemäß behandelten Kohlenstoff-haltigen Katalysatorträgers zu Platin(0).

Mittel zum partiellen Vergiften des Katalysators setzt man vorteilhaft vor der Reduktion zu Platin(0) und nach Abpuffern der Lösung mit einem Alkalimetallacetat wie Natriumacetat oder Kaliumacetat zu.

Wird als Vergiftungsmittel eine Verbindung verwendet, die in der Lage ist, Platin (IV) zu Platin (II) zu reduzieren (z.B. Blankit) so wird die Reduktion vorteilhaft zunächst bis zur Stufe des Platin (II) durchgeführt. Der Endpunkt dieser Reaktion ist in der Regel an einer starken Änderung des Potentials, das man während der Reduktion messen kann, erkennbar. Die partielle Vergiftung erfolgt dann üblicherweise durch Zugabe einer bestimmten über die Reduktion des Platin (IV) zu Platin (II) hinaus benötigten Menge. Anschließend erfolgt in der Regel die reduktive Fällung des Platins auf dem vorbehandelten Graphitträger mit Reduktionsmitteln, die Platin zu metallischem Platin reduzieren. Geeignete Reduktionsmittel sind beispielsweise Hydrazin, Formaldehyd, Ameisensäure oder Alkalimetallformiate wie Natriumformiat.

Verwendet man als Vergiftungsmittel eine Verbindung, die nicht in der Lage ist Platin (IV) zu Platin (II) zu reduzieren, so kann im allgemeinen Platin (IV) direkt mit einem der oben aufgeführten Reduktionsmittel zu Platin (0) gefällt werden.

Als Platin (IV)-Verbindung kommen insbesondere die wasserlöslichen Verbindungen wie Hexachloroplatinsäure und ihre Alkalimetall- und Ammoniumsalze in Frage.

Das Molverhältnis von eingesetztem Platin zu Reduktionsmittel beträgt üblicherweise 1000:1 bis 10:1 vorzugsweise 100:1 bis 20:1.

Als Kohlenstoff-haltiger Träger verwendet man in der Regel suspendierten Graphit oder Aktivkohlen, insbesondere Elektrographitsorten, besonders bevorzugt solche Elektrographitsorten, die eine Korngröße im Bereich von 0.5 bis 600 µm, vorzugsweise von 2 bis 50 µm aufweisen. Die Menge an Platin beträgt im allgemeinen von 0,2 bis 2, vorzugsweise von 0.5 bis 1 Gew.%, bezogen auf die Gesamtmasse an Platin-Graphitträger-Katalysator.

Die Reduktion des Platins nimmt man im allgemeinen in einer wäßrigen Lösung vor, wobei das Gewichtsverhältnis von Wasser zu Platin in der Regel 1000:1 bis 100:1, vorzugsweise von 500:1 bis 100:1 gewählt wird.

Des weiteren führt man die Reduktion bevorzugt im leicht Sauren bis Neutralen durch, wobei der pH-Wert üblicherweise von 4,5 bis 7, bevorzugt von 5 bis 6 beträgt. Die Einstellung des pH-Wertes erfolgt im allgemeinen durch Zusatz von Puffersalzen wie Alkalimetallacetat, insbesondere Natriumacetat.

In einer bevorzugten Ausführungsform verwendet man als Reduktionsmittel Natriumdithionit und gibt gerade soviel Natriumdithionit zu, daß das mit einer Glaselektrode gemessene Potential der Lösung im Bereich von 420 bis 500 mV, vorzugsweise von 440 mV bis 480 mV beträgt. Nach erfolgter Reduktion des Platin(IV) zu Platin (II), das im allgemeinen an einer starken Änderung des Potentials erkennbar ist, gibt man in der Regel eine über die Reduktion des Platin(IV) zu Platin(II) hinaus benötigte Menge an Natriumdithionit zu bis zur Erreichung eines bestimmten Potentials. Dieses Potential charakterisiert den Vergiftungszustand des Katalysators und liegt üblicherweise im Bereich von 440 mV bis 200 mV, bevorzugt von 270 mV bis 340 mV.

In einer weiteren bevorzugten Ausführungsform vergiftet man den Katalysator ohne vorherige Reduktion des Platin(IV) zu Platin (II) partiell durch Zusatz eines üblichen Vergiftungsmittels auf der Basis von Schwefel, Selen, Arsen oder Tellur, wie elementarem Schwefel, Natriumdithionit, Alkalimetallthiosulfate, Schwefelwasserstoff, Alkalimetallsulfid, Alkalimetallpolysulfide, Thioharnstoff, Tellursäure oder Arsensäure oder deren Mischungen.

Das Molverhältnis von Platin zu vergiftendem Schwefel, Selen, Arsen oder Tellur wählt man üblicherweise im Bereich von 20:1 bis 3:1, vorzugsweise von 10:1 bis 5:1.

Die partielle Vergiftung führt man üblicherweise nach an sich bekannten Methoden durch wie sie beispielsweise in der DE-C 40 22 853 beschrieben sind.

Im Anschluß an die gegebenenfalls durchgeführte partielle Vergiftung führt man die Reduktion zu metallischem Platin durch.

Das Molverhältnis von Reduktionsmittel zu Platin wählt man in der Regel im Bereich von 1000:1 bis 10:1, vorzugsweise 100:1 bis 20:1.

Die Temperatur während der Reduktion wählt man im allgemeinen im Bereich von 50 bis 95^{o}C, vorzugsweise von 60 bis 90^{o}C.

Des weiteren arbeitet man zweckmäßig unter Atmosphärendruck.

Nach beendeter Reduktion arbeitet man den Katalysator in der Regel wie üblich auf, beispielsweise indem man ihn vom Reaktionsgemisch abfiltriert und zweckmäßig mit Wasser wäscht.

Die nach dem erfindungsgemäßen Verfahren erhaltenen Katalysatoren eignen sich nach den bisherigen Beobachtungen sowohl zur Hydrierung von organischen als auch von anorganischen Verbindungen.

Bevorzugt setzt man die erfindungsgemäßen Katalysatoren für die Hydrierung von olefinisch oder acetylenisch ungesättigten Verbindungen, weiterhin zur Hydrierung von Carbonsäuren, Aldehyden oder Ketonen zu den entsprechenden Alkoholen oder von Nitrilen zu den entsprechenden Aminen ein. Des weiteren eignen sich die erfindungsgemäßen Katalysatoren zur Hydrierung anorganischer Stoffe wie von Sauerstoff, insbesondere jedoch zur Herstellung von Hydroxylammoniumsalzen durch Hydrieren von Stickstoffmonoxid in wäßrigen Mineralsäuren.

Man kann den erfindungsgemäßen Hydrierungskatalysators oder erfindungsgemäß hergestellten Hydrierungskatalysator zur Herstellung von Hydroxylammoniumsalzen verwenden.

Des weiteren wurde ein Verfahren zur Herstellung von Hydroxylammoniumsalzen durch Reduktion von Stickstoffmonoxid mit Wasserstoff in Gegenwart eines Hydrierungskatalysators, gefunden, in dem man als Hydrierungskatalysator einen erfindungsgemäßen oder erfindungsgemäß hergestellten Hydrierungskatalysator einsetzt.

Bei der Herstellung von Hydroxylammoniumsalzen hält man in der Regel ein Molverhältnis von Wasserstoff zu Stickstoffmonoxid von 1,5:1 bis 6:1, bevorzugt von 3,5 bis 5:1, ein. Besonders gute Ergebnisse erhält man nach den bisherigen Beobachtungen, wenn man darauf achtet, daß in der Reaktionszone ein Molverhältnis von Wasserstoff zu Stickstoffmonoxid von 3,5:1 bis 5:1 aufrecht erhalten wird.

Vorteilhaft verwendet man als Säuren starke Mineralsäuren wie Salpetersäure, Schwefelsäure oder Phosphorsäure oder aliphatische C₁-C₅-Monocarbonsäuren wie Ameisen-, Essig-, Propion-, Butter-, und Valeriansäure, bevorzugt Ameisensäure und Essigsäure. Geeignet sind u.a. auch saure Salze wie Ammoniumbisulfat. In der Regel wendet man 4 bis 6 normale wäßrige Säuren an und läßt üblicherweise im Verlauf der Reaktion die Säurekonzentration nicht unter 0,2 normal absinken.

Die Hydrierung von Stickstoffmonoxid führt man im allgemeinen bei einer Temperatur von 30 bis 80, vorzugsweise von 35 bis 60^{o}C, aus. Des weiteren wählt man den Druck während der Hydrierung üblicherweise im Bereich von 1 bis 30, vorzugsweise 1 bis 20 bar (absolut).

Das Verhältnis von Mineralsäure zu Katalysator wählt man im allgemeinen im Bereich von 1 bis 100, vorzugsweise 30 bis 80 g Platin-Graphit-Katalysator je Liter Mineralsäure.

In einer weiteren bevorzugten Ausführungsform, insbesondere bei der Herstellung von Hydroxylammoniumsalzen, behandelt man den Katalysator vor der Hydrierung in saurer Lösung, zweckmäßig in der Mineralsäure, in der die Hydrierung durchgeführt werden soll, mit Wasserstoff ("Aktivierung").

Ferner wurde ein Verfahren zum Regenerieren eines Platin-haltigen Hydrierungskatalysators gefunden, wobei das Platin auf einen Kohlenstoff-haltigen Katalysatorträger aufgebracht ist, und das man in an sich bekannter Weise durchführen kann, indem man als Kohlenstoff-haltigen Katalysatorträger einen erfindungsgemäßen oder erfindungsgemäß hergestellten Katalysatorträger einsetzt.

Hierzu bringt man den Platinanteil des Katalysators üblicherweise mittels einer Säure oder einem Säuregemisch in Lösung und trennt gegebenenfalls unlösliche Bestandteile ab. Anschließend neutralisiert man die erhaltene Platinsalzlösung und behandelt dann das Platinsalz nach dem oben beschriebenen erfindungsgemäßen Verfahren.

Die erfindungsgemäßen Katalysatoren sind nach den bisherigen Beobachtungen bekannten Katalysatoren für den gleichen Zweck hinsichtlich Selektivität und Standzeit überlegen. Das erfindungsgemäße Verfahren zur Herstellung und zur Regenerierung von Hydrierungskatalysatoren hat gegenüber bekannten Verfahren den Vorteil, daß es einfacher auszuführen ist und gleichzeitig die Mengen an Anfallprodukten reduziert.

### Beispiele

Die Teilchengröße wurde mit einem MALVERN Mastersizer (s. auch Verfahrenstechnik 24 (1990) S. 36ff) bestimmt. Gemessen wurde die Fraunhofer-Beugung bei einer Wellenlänge von 633 nm. Durch Wahl einer Vorsatzlinse mit einer Brennweite von f= 300 nm wurde die Teilchengrößenverteilung in einem Bereich von 1 bis 600 µm bestimmt.

Zur Messung wurde eine Spatelspitze des zu untersuchenden Pulvers in einen Liter einer 0,1 gew.-%igen wäßrigen Nekanil® 910-Lösung (BASF AG; Nekanil® 910 ist ein mit 9 bis 10 mol Ethylenoxid umgesetztes Nonylphenol; Eigenschaften:wasserklare, viskose Flüssigkeit; nichtionisch, Dichte bei 20^{o}C: 1,04 g/cm³; Stockpunkt: unter -10°C; pH-Wert einer 1 gew.-%igen Lösung 6,5 bis 8,5) gegeben. Vor der Messung wurde die so erhaltene zu untersuchende Mischung 1 min einer Ultraschall-Behandlung unterzogen.

Zur Bestimmung der spezifischen Platin-Oberfläche wurden die erfindungsgemäßen Kohlenstoff-haltigen Ti-dotierten Katalysatoren mittels H2-Puls-Chemisorption (Pulse Chemisorb 2700, 35^{o}C) untersucht. Zur Probenvorbereitung wurde das zu untersuchende Material zunächst mit Wasserstoff (30 ml/min) 30 min bei 200^{o}C behandelt, und dann mit Argon (30 ml/min) 30 min bei 250^{o}C "gespült". Zur Untersuchung selbst wurde die Probe mit Wasserstoff-Pulsen (200 µl pro Puls) mit einer Flußrate von 16 ml/min bei einer Temperatur von 35^{o}C solange beaufschlagt, bis die Probe keinen weiteren Wasserstoff mehr aufnehmen konnte.

Als Blindproben wurden zwei Graphitträger (hergestellt analog zu Beispiel 1 [Becker-Pennrich] bzw. Beispiel 2 [Asbury]) ohne Platin, jedoch erfindungsgemäß mit einer Verbindung I behandelt:
a) bei Graphit (Becker-Pennrich) mit einer Teilchengröße im Bereich von 28 bis 50 µm, ohne Pt, mit 0,064 Gew.-% Ti, bezogen auf das gesamte Trägermaterial, lag die Wasserstoffadsorption unterhalb der Nachweisgrenze (ca. 0,2 µmol/g bei der gegebenen Probenmenge);
b) bei Graphit (Asbury-Graphit) mit einer Teilchengröße im Bereich von 2 bis 50 µm, ohne Pt, mit 0,064 Gew.-% Ti, bezogen auf das gesamte Trägermaterial, lag die Wasserstoffadsorption unterhalb der Nachweisgrenze.

### Beispiel 1

45 g Graphit der Körnung 28-50 µm wurden in 100 ml trockenem n-Butanol suspendiert. Zur Suspension wurden 0,16 g Ti(O-i-C₃H₇)₄ gegeben und 2 Tage gerührt. Nach dieser Zeit wurden 0,1 ml bidest. Wasser zugegeben und noch 1 h gerührt. Der beschichtete Graphit wurde abfiltriert und 12 h bei 110°C unter N₂ getrocknet. Die Analyse ergab einen Ti-Gehalt von 0,064 % (theor.: 0,08 %).

40 g des mit Titan vorbehandelten Graphits mit einer Teilchengröße von 28-50 µm und 0.5310 g Hexachloroplatin-IV-Säure-6-hydrat wurden mit 40 ml einer wäßrigen Lösung, die 3,87 ml konzentrierte Salzsäure und 0,87 ml konzentrierte Salpetersäure enthielt, über Nacht bei 8^{o}C gerührt. Die erhaltene Suspension wurde solange mit Natriumcarbonat versetzt bis ein pH-Wert von 2,75 erreicht war. Anschließend wurden 2,5 g Natriumacetat zur Pufferung zugegeben. Danach wurde 2,5 mg elementarer Schwefel zugefügt und nach etwa einer Minute das Platin durch Zugabe von 14 g einer 40 Gew.-%igen Natriumformiat-Lösung (5,63 g Natriumformiat, etwa 81facher Überschuß bezogen auf Platin) gefällt. Die Lösung wurde noch 2 h bei 80^{o}C gerührt. Nach dieser Zeit war mit Hydrazinhydrat (ergibt in alkalischer Lösung bei Anwesenheit von Platin einen schwarzen Niederschlag) kein Platin mehr nachweisbar.

Der so hergestellte Katalysator wurde durch Filtration über eine Glasfritte vom Reaktionsgemisch abgetrennt und solange mit destilliertem Wasser gewaschen, bis der pH-Wert des Waschwassers nicht, mehr im sauren Bereich lag. Der getrocknete Katalysator enthielt 0,5 Gew.-% Platin.

Die Pt-Oberfläche wurde durch Pulschemisorption bestimmt. Dazu wurde die Katalysatorprobe 30 min bei 200^{o}C unter Wasserstoffstrom und 30 min unter Argon-Strom jeweils mit einer Flußrate von 30 ml/min vorbehandelt. Die H₂-Pulschemisorption ergab eine Wasserstoffaufnahme von 2,4 (± 0,1) µmol/g, entsprechend einer Dispersion von 18,5 ± 0,5 %.
b) 4,8 g des unter a) hergestellten Katalysators wurden in 120 ml 4,3 N Schwefelsäure suspendiert und bei 40^{o}C unter kräftigem Rühren (3500 Upm) pro Stunde 7,75 l eines Gemisches aus 35 Vol.-% Stickstoffmonoxid und 65 Vol.-% Wasserstoff eingeleitet. Nach 4 h wurde der Katalysator abgetrennt und die Flüssigphase analysiert. Anschließend wurde der abgetrennte Katalysator mit 120 ml 4,3 N Schwefelsäure versetzt und die Reaktion fortgeführt. Dieser Vorgang wurde alle 4 h wiederholt. Die Reaktion wurde abgebrochen, nachdem die Selektivität zu gebildetem Distickstoffmonoxid die gesetzte Obergrenze von 10 % überschritt. Die Versuchsergebnisse sind aus der nachfolgenden Tabelle ersichtlich.

### Vergleichsbeispiel 1

Es wurde wie in Beispiel 1 verfahren, mit den Unterschieden, daß unbehandelter Graphit der Körnung 28 bis 50 µm verwendet und zur Vergiftung 6 mg elementarer Schwefel zugesetzt wurde. Der getrocknete Katalysator enthielt 0,5 Gew.-% Platin.

Die H₂-Pulschemisorption ergab eine Wasserstoffaufnahme von 0,3 (± 0,1) µmol/g, entsprechend einer Dispersion von 2 ± 0,5 %. Die erzielten Ergebnisse sind nachstehender Tabelle zu entnehmen. D.h., durch die erfindungsgemäße Behandlung des Kohlenstoffhaltigen Trägers konnte die zugängliche Pt-Oberfläche drastisch erhöht werden (vgl. Bsp. 1a).

### Beispiel 2

45 g Graphit (der Firma Asbury) der Körnung 2 bis 50 µm wurden in 100 ml trockenem n-Butanol suspendiert. Zur Suspension wurden 0,16 g TiCl₄ gegeben und 2 Tage gerührt. Nach dieser Zeit wurden 0,1 ml bidest. Wasser zugegeben und noch 1 h gerührt. Der beschichtete Graphit wurde abfiltriert und 12 h bei 110^{o}C unter N₂ getrocknet. Die Analyse ergab einen Ti-Gehalt von 0,065 % (theor.: 0,06 %).

40 g des mit Titan vorbehandelten Graphits mit einer Teilchengröße von 2 bis 50 µm und 0,5310 g Hexachloroplatin-IV-Säure-6-hydrat wurden mit 40 ml einer wäßrigen Lösung, die 3,87 ml konzentrierte Salzsäure und 0,87 ml konzentrierte Salpetersäure enthielt, über Nacht bei 80^{o}C gerührt. Die erhaltene Suspension wurde solange mit Natriumcarbonat versetzt, bis ein pH-Wert von 2,75 erreicht war. Anschließend wurden 2,5 g Natriumacetat zur Pufferung zugegeben. Danach wurde 6 mg elementarer Schwefel zugefügt und nach etwa einer Minute das Platin durch Zugabe von 14 g einer 40 gew.-%igen Natriumformiat-Losung (5,63 g Natriumformiat, etwa 81facher Überschuß, bezogen auf Platin) gefällt. Die Lösung wurde noch 2 h bei 80^{o}C gerührt. Nach dieser Zeit war mit Hydrazinhydrat (ergibt in alkalischer Lösung bei Anwesenheit von Platin einen schwarzen Niederschlag) kein Platin mehr nachweisbar.

Der so hergestellte Katalysator wurde durch Filtration über eine Glasfritte vom Reaktionsgemisch abgetrennt und solange mit destilliertem Wasser gewaschen, bis der pH-Wert des Waschwassers nicht mehr im sauren Bereich lag. Der getrocknete Katalysator enthielt 0,5 Gew.-% Platin.
b) 4,8 g des unter a) hergestelltem Katalysators wurden in 120 ml 4,3 N Schwefelsäure suspendiert und bei 40^{o}C unter kräftigem Rühren (3500 Upm) pro Stunde 7,75 l eines Gemisches aus 35 Vol.-% Stickstoffmonoxid und 65 Vol.-% Wasserstoff eingeleitet. Nach 4 h wurde der Katalysator abgetrennt und die Flüssigphase analysiert. Anschließend wurde der abgetrennte Katalysator mit 120 ml 4,3 N Schwefelsäure versetzt und die Reaktion fortgeführt. Dieser Vorgang wurde alle 4 h wiederholt. Die Reaktion wurde nach 50 Chargen abgebrochen. Die Versuchsergebnisse sind aus der untenstehenden Tabelle ersichtlich.

### Vergleichsbeispiel 2

Es wurde wie in Beispiel 2 verfahren, mit den Unterschieden, daß unbehandelter Graphit der Körnung 2 bis 50 µm verwendet und zur Vergiftung 5 mg elementarer Schwefel zugesetzt wurde. Die erzielten Ergebnisse sind nachstehenden Tabelle zu entnehmen.

**Tabelle**

| Beispiel | 1 | Vergleich 1 | 2 | Vergleich 2 |
|---|---|---|---|---|
| Anzahl der Zyklen | 19 | 12 | 50 | 50 |
| Selektivität NH₂OH [%] | 86,77 | 86,36 | 91,96 | 89,90 |
| Selektivität NH₃ [%] | 10,64 | 8,02 | 6,66 | 9,34 |
| Selektivität N₂O [%] | 2,58 | 5,62 | 1,38 | 0,76 |
| NO-Umsatz [%] | 91,12 | 90,27 | 96,64 | 95,87 |
| Raum-Zeit-Ausbeute [mol NH₂OH/l H₂SO₄·h] | 0,798 | 0,788 | 0,897 | 0,870 |

Aus der Tabelle ist ersichtlich, daß die Standzeit des Katalysators aus Beispiel 1 gegenüber dem Vergleichskatalysator deutlich erhöht ist (19 vs. 12 Zyklen).

Der Katalysator aus Beispiel 2 führt bei gleicher Laufzeit von 50 Zyklen zu einer deutlich höheren HA-Selektivität und einer verbesserten Raum-Zeit-Ausbeute als der Katalysator aus Vergleichsbeispiel 2.

(Wegen der unterschiedlichen Korngrößenverteilung lassen sich die Ergebnisse von Bsp. 1 nur mit Vgl.Bsp. 1 und Bsp. 2 nur mit Vgl.Bsp. 2 vergleichen.)

## Patentansprüche

1. Verfahren zur Herstellung eines kohlenstoffhaltigen Katalysatorträgers, dadurch gekennzeichnet, daß man den kohlenstoffhaltigen Katalysatorträger mit einer Verbindung der allgemeinen Formel I
M(OR)ₘXₙ I
in der M für Ti oder Zr, X für Cl oder Br und R für C₁-C₂₀-Alkyl stehen, und m und n ganze Zahlen zwischen null und vier sind, wobei die Summe aus m und n gleich vier ist, behandelt.

2. Kohlenstoff-haltiger Katalysatorträger, hergestellt gemäß dem Verfahren aus Anspruch 1.

3. Verwendung einer Verbindung I zur Herstellung eines kohlenstoffhaltigen Katalysatorträgers.

4. Verfahren zur Herstellung eines Hydrierungskatalysators durch Fällen von Platin in einem wäßrigen Medium auf einen kohlenstoffhaltigen Katalysatorträger, gegebenenfalls nach erfolgter partieller Vergiftung mit Schwefel-, Arsen-, Tellur- oder Antimon-haltigen Verbindungen, mit einem Reduktionsmittel, dadurch gekennzeichnet, daß der kohlenstoffhaltige Katalysatorträger mit einer Verbindung I behandelt wurde.

5. Hydrierungskatalysator, hergestellt gemäß dem Verfahren aus Anspruch 4.

6. Verwendung des kohlenstoffhaltigen Katalysatorträgers nach Anspruch 2 oder hergestellt nach Anspruch 1 zur Herstellung eines Platin-haltigen Hydrierungskatalysators.

7. Verwendung einer Verbindung I zur Herstellung eines Pt-haltigen Hydrierungskatalysators.

8. Verwendung des Hydrierungskatalysators nach Anspruch 5 oder hergestellt nach Anspruch 4 zur Herstellung von Hydroxylammoniumsalzen.

9. Verfahren zur Herstellung von Hydroxylammoniumsalzen durch Reduktion von Stickstoffmonoxid mit Wasserstoff in Gegenwart eines Hydrierungskatalysators, dadurch gekennzeichnet, daß man als Hydrierungskatalysator einen Hydrierungskatalysator gemäß Anspruch 5 oder hergestellt gemäß Anspruch 4 einsetzt.

10. Verfahren zum Regenerieren eines Platin-haltigen Hydrierungskatalysators, wobei das Platin auf einen kohlenstoffhaltigen Katalysatorträger aufgebracht ist, in an sich bekannter Weise, dadurch gekennzeichnet, daß man als kohlenstoffhaltigen Katalysatorträger einen Katalysatorträger gemäß Anspruch 2 oder hergestellt gemäß Anspruch 1 einsetzt.
